Europäisches Patentamt

European Patent Office

Office européen des brevets

(11) Veröffentlichungsnummer: **0 322 598**
**A2**

# (12) EUROPÄISCHE PATENTANMELDUNG

(21) Anmeldenummer: 88120255.0

(22) Anmeldetag: 05.12.88

(51) Int. Cl.⁴: **F16K 31/02**

(30) Priorität: 24.12.87 DE 3744240

(43) Veröffentlichungstag der Anmeldung:
**05.07.89 Patentblatt 89/27**

(84) Benannte Vertragsstaaten:
**FR GB IT**

(71) Anmelder: **PIERBURG LUFTFAHRTGERÄTE UNION GMBH**
**Bataverstrasse 80**
**D-4040 Neuss(DE)**

(72) Erfinder: **Holzem, Heinz, Dipl.-Ing.**
**An den Hüren 51**
**D-4050 Mönchengladbach 1(DE)**

(74) Vertreter: **Bergen, Klaus, Dipl.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) **Fluiddurchströmtes Elektroventil.**

(57) Bei einem fluiddurchströmten Elektroventil mit mindestens einem im Ventilgehäuse (1) angeordneten elektromechanischen Wandler, der zum Verändern von Fluidströmen oder -drücken Stellbewegungen eines Modulators bewirkt, erlaubt ein elastisches Getriebe (6, 106, 206, 506, 606) zwischen dem Modulator (12, 112) und dem elektromechanischen Wandler (4, 104, 204, 304, 404, 504, 604) ein variables Übersetzungsverhältnis und erzeugt der das Getriebe beaufschlagende Wandler bei kurzen Öffnungs- und Schließzeiten einen größeren Hub des Modulators.

Fig.1

EP 0 322 598 A2

## Fluiddurchströmtes Elektroventil

Die Erfindung betrifft ein fluiddurchströmtes Elektroventil mit einem im Ventilgehäuse angeordneten elektromechanischen Wandler, der zum Verändern von Fluidströmen oder -drücken Stellbewegungen eines Modulators bewirkt.

Elektromagnetisch zu betätigende Ventile sind insbesondere als Einspritzventil für Verbrennungsmotoren oder als Servoventil in pneumatischen und hydraulischen Systemen zum Steuern von Stellbewegungen bekannt. So wird beispielsweise der Weg bzw. Hub eines elektromechanischen Wandlers, worunter hier elektromagnetische oder piezoelektrische Wandler verstanden werden, auf einen Modulator übertragen, der aufgrund dieser Bewegung die Menge eines Fluidstromes oder -druckes verändert. Unter Fluiden werden hierbei sowohl die in einem Servosystem eingesetzten hydraulischen und pneumatischen Medien als auch - beim Einsatz des Ventils als Einspritzventil - Kraftstoff verstanden.

Aus der DE-OS 29 40 239 ist ein schnellfrequentes, periodisch zu betätigendes Einspritzventil bekannt. Ein Magnetanker trägt dort eine als Modulator dienende Kugel, die sich durch mehr oder weniger Kippen des einseitig gelagerten Magnetankers um eine Kippkante dem Ventilsitz - bis zur Schließlage - entweder nähert oder sich entfernt und damit den Fluidstrom moduliert. Eine zufriedenstellende mechanische Hubleistung läßt sich allerdings nur dann erzielen, wenn der magnetische Widerstand und damit der sogenannte Arbeitsluftspalt bzw. der Ankerhub sehr klein ist. Daraus resultiert jedoch ein entsprechend geringer Hub der Schließkugel von weniger als 0,1 mm. Das trifft ebenfalls für die außerdem bekannten piezoelektrischen Wandler zu, die bei ähnlichen Anwendungen zwar Schaltzeiten unter 0,5 Millisekunden ermöglichen, dabei jedoch mit ausreichend kompakter Baugröße nur Hübe von weniger als 0,05 mm erlauben.

Ein derartig geringer Hub eines Modulators bringt jedoch erhebliche Nachteile mit sich. Diese Nachteile liegen in der Verstopfungsgefahr am engen, spaltförmigen Durchlaßquerschnitt zwischen dem Schließkörper und dem Ventilsitz, woraus sich die Notwendigkeit eines großen Durchmessers des Ventilsitzes und damit einer großen hydraulischen Schließkraft sowie ein großes Hubvolumen des Schließkörpers ergeben, der im Falle des Einspritzventils beim Öffnen viel Luft ansaugt und die Genauigkeit der Dosierung stört; der erhöhten Massenträgheit; dem starken Anstieg der Leckage schon bei geringem Zentrierfehler des Schließkörpers und einer nur unzureichenden Anpassung an die Kraft-Weg-Kennlinie des Magnet- oder Piezosystems.

Es ist bekannt, den Hub des Modulators von Servoventilen durch ein Hebelgetriebe mit starren Hebelarmen und festliegendem Übersetzungsverhältnis zu vergrößern. Eine sehr häufig angewandte Anordnung eines Servoventils besteht aus einer Düse und einer mit variablen Abstand davor bewegten Prallplatte als Modulator. Eine Bewegung der von einem Hebel getragenen Prallplatte gegenüber der Düse erzeugt eine veränderliche Auslaßöffnung bzw. einen veränderlichen Abströmquerschnitt, wobei sehr kleine Wege der Prallplatte Druckänderungen des Mediums bewirken. Weiterhin ist es bekannt, mindestens eine Fangbohrung gegenüber einer schwenkbaren Freistrahldüse bzw. einem -rohr anzuordnen. Bei zwei nebeneinander liegenden Fangbohrungen erhält je nach der Lage des Strahlrohres die eine oder die andere Fangbohrung einen größeren Anteil des Auffangdruckes; beide Fangbohrungen werden hydraulisch oder pneumatisch gegeneinander geschaltet und erzeugen eine Druckdifferenz, deren Größe und Richtung von der Auslenkung des Strahlrohres aus der Mittellage abhängt. Wenn die beiden Fangbohrungen beispielsweise mit den Druckräumen vor und hinter einem Stellkolben eines Stellzylinders verbunden sind, lassen sich auf diese Weise entweder Rechts- und Linksbewegungen oder Auf- und Abbewegungen des Stellkolbens erreichen. Nachteilig sind bei den Modulatoren dieser bekannten Servoventile insbesondere die aufwendige Hebel-Lagerung sowie eine hohe Massenträgheit und ein nach wie vor nicht ausreichender Modulatorhub.

Der Erfindung liegt die Aufgabe zugrunde, ein Elektroventil zu schaffen, das bei kurzen Öffnungs- und Schließzeiten einen gegenüber den bekannten Lösungen größeren Hub des Modulators erlaubt und einfach herzustellen ist.

Diese Aufgabe wird erfindungsgemäß durch ein elastisches Getriebe zwischen dem Modulator und dem elektromechanischen Wandler gelöst, wobei das Getriebe vorzugsweise einen an einem Ende vorteilhaft im Ventilgehäuse eingespannten Biegestab und zumindest einen einerseits an dem freien Biege stabende angreifenden und andererseits mit dem Wandler verbundenen Wandlerstab besitzt. Die Erfindung geht von dem Grundgedanken eines auf dem Prinzip von Pfeil und Bogen basierenden Getriebes aus, bei dem das wegen seiner schwerpunktmäßigen Anwendung als Biegestab bezeichnete Element den Bogen und damit das Kraftspeicherelement darstellt, während das wegen seiner Verbindung mit dem Wandler als Wandlerstab bezeichnete Element die Sehne darstellt, über deren Stellbewegungen Kraft bzw. Energie in den Biegestab eingeleitet wird. Der Biege- und der Wandlerstab verlaufen jeweils nur unter einem kleinen Winkel, vorzugsweise kleiner als 20°, zu einer gemeinsamen, den Verbindungspunkt der beiden Stäbe schneidenden horizontalen Bezugsgeraden. Daraus ergibt sich, daß schon eine geringe Verschiebung des mit dem bzw. den Wandlerstäben verbundenen, beispielsweise angeschweißten, an seinem freien Ende den Modulator tragenden, gehäuseseitig eingespannten Biegestabes einen großen Hub des Verbindungspunktes der Stäbe in eine Richtung senkrecht zur Bezugsgeraden erzeugt.

Das erfindungsgemäße Bogen-Pfeil-Getriebe läßt sich in verschiedenen Ausführungen realisieren. Gemäß einer ersten Ausführung können die Stäbe in ihrer Ausgangslage schwach durchhängend angeordnet sein, beispielsweise wie eine unbelastete, an beiden Enden festgelegte Kette; gemäß einer zweiten Ausführung können die Stäbe eine Art von spitzem Ausleger bilden, der einer halben Bogen-Sehne-Anordnung gleicht. Diese beiden Ausführungen lassen sich vorteilhaft abwandeln, indem der Wandlerstab über ein Zwischenstück an dem freien Biegestabende angreift. Durch das Zwischenstück läßt sich erreichen, daß die Stäbe mit einem von dem Zwischenstück bestimmten Abstand voneinander entfernt sind und - da die Zugkraft des Wandlerstabes querversetzt wirkt -in den Biegestab ein Moment einleiten, das längs des Biegestabes im wesentlichen konstant ist. Das Einleiten eines im wesentlichen konstanten Biegemomentes ermöglicht eine günstige Nutzung des elastischen Arbeitsvermögens des Biegestabes; dieser kann somit einen einfach herzustellenden, über seine Länge gleichbleibenden Querschnitt besitzen. Der Biegestab führt den Modulator auf einer gegenüber dem Gehäuse bzw. dem Ventilsitz od.dgl. reproduzierbaren Bahn und sorgt aufgrund seiner gespeicherten Energie außerdem für das Rückstellen des Modulators.

Alternativ kann sich der Biegestab zum freien Stabende hin verjüngen, wobei der sich verjüngende Querschnitt die Massenträgheit des Biegestabes verringert. Die Verjüngung gleicht das zum freien Stabende hin abnehmende Biegemoment aus und ermöglicht eine günstige Nutzung des elastischen Arbeitsvermögens des Biegestabes.

Mittels des erfindungsgemäß elastischen Getriebes läßt sich beim Beaufschlagen des elektromechanischen Wandlers, der vorzugsweise über einen Stößel mit dem von dem freien Biegestabende entfernten Ende des Wandlerstabes verbunden ist, der Modulator auf einer Bahnkurve bewegen und dabei der Hub des Modulators auf der Bahnkurve gegenüber dem Hub des Stößels des elektromechanischen Wandlers mit variablem Übersetzungsverhältnis verändern. Das für alle Ausführungen des elastischen Getriebes gültige momentane Übersetzungsverhältnis läßt sich wie folgt erklären: die Krümmung des Biegestabs ändert sich mit dem Modulatorhub, wobei ein auf dem Modulator festgelegter Bezugspunkt eine nicht kreisförmige Bahn beschreibt. Es liegt stets eine Bahnnormale vor, von der aus ein momentaner Bahnradius bestimmt wird, an dessen Ende der augenblickliche Drehpunkt des Modulators liegt, der sogenannte Momentanpol. Es ergibt sich außerdem eine Gerade, auf der die Kraft des Stößels bzw. des Wandlerstabes des elektromechanischen Wandlers wirkt und die durch den Bezugspunkt auf dem Modulator hindurchgeht. Der kürzeste Abstand des Momentanpols von dieser Geraden ist dann der momentane Hebelarm der Krafteinleitung. Das Übersetzungsverhältnis bestimmt sich dann als Verhältnis des Bahnradius zu dem momentanen Hebelarm, d.h. der wirksamen Hebelarmlänge.

Bei einem elastischen Getriebe mit einem sich dem Wandlerstab in der Längserstreckung anschließenden Biegestab nimmt gemäß der vorstehenden Definition das Übersetzungsverhältnis zu und bei einem elastischen Getriebe mit auslegerartig angeordneten Stäben, d.h. der Wandler- und der Biegestab verlaufen zueinander unter einem spitzen Winkel, nimmt das Übersetzungsverhältnis ab. Die Ausführung mit zunehmendem Übersetzungsverhältnis eignet sich vorteilhaft in Kombination mit einem elektromagnetischen Wandler. Bekanntlich nimmt die Hubkraft am Stößel eines elektromagnetischen Wandlers mit zunehmendem Arbeitsluftspalt bzw. Ankerhub stark ab. Darauf zurückzuführende Stellkraftverluste am Modulator lassen sich durch ein bei Beginn des Hubes kleineres und dann zunehmendes Übersetzungsverhältnis vermeiden, beispielsweise durch einen beim Hubbeginn stärker durchhängenden bzw. durchgebogenen Wandlerstab, der mit dem Hub des Wandlers straffer wird. Aufgrund dieser Übersetzung bleibt der Arbeitsluftspalt trotz des größeren Modulatorhubes sehr klein.

Ein elastisches Getriebe mit abnehmendem Übersetzungsverhältnis eignet sich insbesondere in Kombination mit einem piezoelektrischen Wandler, dessen hoher Elastizitätsmodul eine mit dem Hub stark abnehmende Nutzkraft am Stößel und damit eine unzureichende Stellkraft am Modulator verursacht. Dieser Nachteil läßt sich durch das mit dem Hub in Zugrichtung des Wandlerstabes abnehmende Übersetzungsverhältnis ausgleichen

Bei einem Wandlerstab, der sich bis zwischen Magnetspulen des elektromechanischen Wandlers erstreckt, läßt sich die Baugröße des Elektroventils verringern.

Vorteilhaft läßt sich durch mit dem Stößel verbundene Blattfedern eine parallele Führung des Stößels und des mit dem Stößel verbundenen Magnetankers erreichen; die dem Stößel abgewandten Enden der Blattfedern lassen sich im Ventilgehäuse festlegen.

Bei Verwendung des Elektroventils als Einspritzventil für Verbrennungsmotoren läßt sich der Modulator als mit einer Ventilbohrung korrespondierender Ventilschließkörper ausbilden.

Der Ventilschließkörper läßt sich auch vorteilhaft über ein Gelenk an die Verbindungsstelle anlenken und kann dann vorteilhaft in eine der Ventilbohrung vorgeschaltete Zentrierbohrung eingreifen. Der Ventilschließkörper läßt sich auf diese Weise durch die, beispielsweise in einem Block angeordnete, Zentrierbohrung zentrisch zur Ventilbohrung, d.h. auf einer Geraden in Richtung auf den Ventilsitz führen. Der Bezugspunkt für die Hubbewegung des Modulators wird in diesem Fall annäherungsweise durch die Verbindungsstelle zwischen dem Wandlerstab und dem Biegestab definiert.

Bei einem Einspritzventil, das einen Block mit vorgeschalteter Zentrierbohrung besitzt, läßt sich der Block oberhalb der Ventilbohrung vorzugsweise mit einem Zulaufkanal versehen, der einen sich in Strömungsrichtung des Fluids spiralförmig verjüngenden Querschnitt aufweist, wobei die Höhe des Zulaufkanals vorzugsweise etwa dem maximalen Hub des Modulators entspricht. Aufgrund des spiralförmigen Verlaufs des Kanals erhält das Fluid vor dem Eintritt in die Ventilbohrung einen das Zerstäuben des Fluids begünstigenden Drall, wobei durch Fliehkraft zusätzlich eine Radialgeschwindigkeit entsteht und bewirkt, daß das Fluid innerhalb eines Kegels fein zerstäubt wird. Die Höhe des Zulaufkanals ist dabei so bemessen, daß die Unterkante des Ventilschließkörpers in der angehobenen Position gerade noch in einer Ebene mit der Oberkante des Zulaufs verläuft; ein stetiges, Stoßverluste bewirkendes Überschneiden der Kanten wird damit reduziert.

Der Modulator läßt sich vorteilhaft durch eine den Biegestab und/oder den Modulator mit dem Ventilgehäuse verbindende Führungsstrebe gezielt führen, so daß die Bahnkurve im wesentlichen in einer Ebene liegt.

Mit einer den Biegestab in Richtung auf die Ventilbohrung beaufschlagenden Schließfeder läßt sich die vorhandene, jedoch insbesondere bei zunehmendem Öffnungshub des Modulators abnehmende hydraulische Schließkraft verstärken und bei nicht vorhandenem Fluiddruck außerdem das Ventil dichthalten. Je nach Auslegung bzw. Dimensionierung des Biege stabes kann die Kraft der - entsprechend ihrer Anwendung als Schließfeder bezeichnete - Feder im Biegestab selbst enthalten sein und eine zusätzliche Feder dann entfallen.

Bei Verwendung des Elektroventils als Servoventil lassen sich vorteilhaft zumindest in zwei unterschiedlichen Ebenen zu dem Biegestab angeordnete, mit Wandlerstäben an das freie Biegestabende angreifende elektromechanische Wandler vorsehen. Die in unterschiedlichen Ebenen angeordneten Wandlerstäbe erlauben mehrdimensionale Bewegungen des Modulators.

Bei Verwendung des Elektroventils als Servoventil läßt sich der Biegestab vorteilhaft als Freistrahlrohr mit einer Düse ausbilden und liegt der Düse zumindest eine Fangbohrung gegenüber. Bedingt durch das gegebenenfalls in mehreren Ebenen wirksame Freistrahlrohr mit mehreren gegenüberliegenden Fangbohrungen verändern sich durch Verschwenken des Strahlrohrs die Drücke in den Fangbohrungen, wodurch sich beispielsweise Steuerfunktionen verschiedener Stellzylinder erfüllen lassen, wenn die Fangbohrungen mit den Druckräumen dieser Stellzylinder verbunden sind.

Vorteilhaft lassen sich im Hubweg des Modulators Anschläge anordnen. Mittels der festen oder einstellbaren Anschläge, wie z.B. einer Schraube, läßt sich der Hub des Biegestabes mit dem daran befestigten Modulator auf einen Wert unterhalb des Maximalhubes begrenzen.

Die Anschläge lassen sich vorzugsweise als Düsen ausbilden. Das als Modulator bis zwischen die Düsen ragende Freistrahlrohr wirkt in diesem Fall als Prallplatte, beispielsweise wie in einem Düsen-Prallplatten-Servoventil.

Mit einem sich vorteilhaft längs des Biegestabes erstreckenden Gehäusevorsprung, der eine bogenförmige Nockenfläche aufweist, läßt sich die Krümmung des Biegestabes und damit das Übersetzungsverhältnis des elastischen Getriebes beeinflussen. Je mehr sich der Biegestab unter der Zugkraft des Wandlerstabes an die vorteilhaft kreisbogenförmige Kontur der Nockenfläche anlegt, desto größer wird das Übersetzungsverhältnis. Bei einem Biegestab mit über die Länge gleichbleibendem Querschnitt läßt sich mittels des Nockens außerdem das elastische Arbeitsvermögen verbessern.

Die Erfindung wird nachfolgend anhand der in den Zeichnungen dargestellten Ausführungsbeispiele näher beschrieben.

Es zeigen:

Fig. 1 eine erste Ausführung eines erfindungsgemäß elastischen Getriebes in der ein Elektroventil öffnenden Lage, d.h. mit annähernd maximalem Hub des Modulators und großem momentanen Übersetzungsverhältnis;

Fig. 2 die Ausführung gemäß Fig. 1 in der Schließlage, in der der Modulator das Ventil absperrt und das elastische Getriebe ein kleines momentanes Übersetzungsverhältnis besitzt;

Fig. 3 eine zweite Ausführung eines erfindungsgemäß elastischen Getriebes, bei dem ein in seiner Öffnungslage dargestellter Modulator an einem auslegerartig ausgebildeten, aus zwei einen spitzen Winkel zwischen sich einschließenden Stäben bestehenden Getriebe angeordnet ist, und mit einem sich zwischen den Stäben erstreckenden Gehäusevorsprung;

Fig. 4 ein Getriebe gemäß Fig. 1 mit einem Zwischenstück als Verbindungselement für zwei Stäbe;

Fig. 5 ein Getriebe gemäß Fig. 3 mit einem Zwischenstück als Verbindungselement für zwei Stäbe;

Fig. 6 einen über ein Gelenk mit einem Getriebe gemäß Fig. 1 verbundenen Modulator, der in eine Zentrierbohrung eingreift;

Fig. 7 als Einzelheit einen in eine Zentrierbohrung eines einer Ventilbohrung vorgeschalteten Blockes eingreifenden, an ein Getriebe angelenkten Modulator;

Fig. 8 einen Schnitt entlang der Linie VII-VII in Fig. 7;

Fig. 9 eine einen Modulator auf seiner Bewegungsbahn führende Strebe, schematisch dargestellt;

Fig. 10 im Querschnitt die Gesamtdarstellung eines Einspritzventils für Verbrennungsmotoren mit einem Getriebe gemäß Fig. 1;

Fig. 11 den Verlauf der Magnetkraft Fmag eines elektromechanischen Wandlers über dem Hub eines Stößels und über dem Übersetzungsverhältnis bei offenem und geschlossenem Ventil mit einem Getriebe gemäß Fig. 1 und Fig. 2;

Fig. 12 die Kräftebilanz an einem mittels eines elektromechanischen Wandlers über ein Getriebe gemäß Fig. 1 und Fig. 2 verstellbaren Modulator;

Fig. 13 im Querschnitt die Gesamtdarstellung eines Einspritzventils für Verbrennungsmotoren mit einem Getriebe gemäß Fig. 3 und einen über einen Stab mit dem Getriebe verbundenen Modulator;

Fig. 14 eine Abwandlung des Getriebes gemäß Fig. 3 mit zwei elektromechanischen Wandlern und zwei am Modulator angreifenden Stäben;

Fig. 15 ein durch einen dritten Stab erweitertes Getriebe gemäß Fig. 3 und Fig. 14;

Fig. 16 ein Getriebe gemäß Fig. 14 mit in unterschiedlichen Ebenen seitlich versetzt zueinander angeordneten elektromechanischen Wandlern für zwei am eingespannten Biegestab angreifende Stäbe; und

Fig. 17 im Querschnitt die Gesamtdarstellung eines Servoventils mit einem Getriebe gemäß Fig. 3 und Fig. 14 und einem als Freistrahlrohr mit Düse ausgebildeten Biegestab.

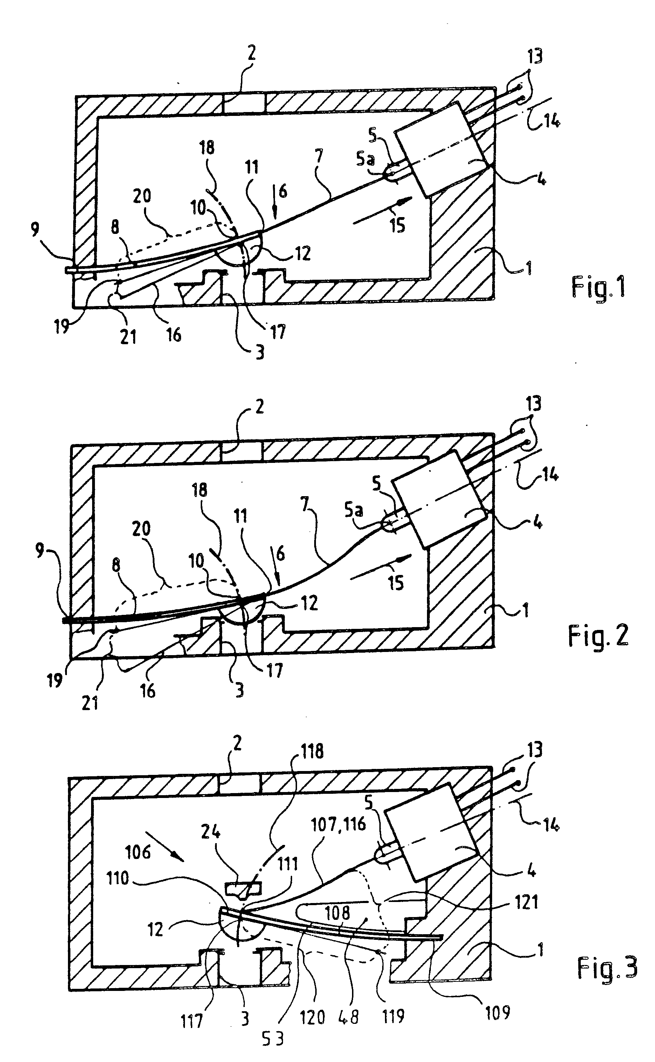

In Fig. 1 besitzt ein von einem Fluid durchströmtes Ventilgehäuse 1 einen Zulauf 2 und eine Ventilbohrung 3, über die das Fluid abströmt. Ein im Ventilgehäuse angeordneter elektromechanischer Wandler 4, der aus einem magnetischen oder piezoelektrischen System besteht, ist über einen Stößel 5 mit einem Getriebe 6 verbunden, das aus einem Wandler stab 7 und einem Biegestab 8 besteht. Sowohl in Fig. 1 als auch allen anderen Figuren sind die Durchbiegungen der Biege- und Wandlerstäbe aus Gründen der besseren Übersicht sehr stark überhöht dargestellt. Der Biegestab 8 ist mit einem Ende 9 im Ventilgehäuse 1 eingespannt und an seinem freien Biegestabende 10 mit dem Ende 11 des Wandlerstabes 7 verbunden. Außerdem ist an dem freien Biegestabende 10 ein als Ventilschließkörper 12 ausgebildeter Modulator angeordnet. Über elektrische Anschlußklemmen 13 läßt sich die Spannung im Wandler 4 verändern und ein Hub des Stößels 5 in Richtung der Längsachse 14 erzeugen.

Um von der Schließlage gemäß Fig. 2 in die in Fig. 1 dargestellte Öffnungslage des am Biegestab 8 befestigten Ventilschließkörpers 12 zu gelangen, bewegt sich der Stößel 5 beim Anlegen einer Spannung an die Klemmen 13 in Pfeilrichtung 15 und bewirkt eine sich über den Stab 7 in den Biegestab 8 fortpflanzende Längskraft; während sich der in der Ausgangslage gemäß Fig. 2 ähnlich einem Seil durchhängende bzw. -gebogene Stab 7 in Pfeilrichtung 15 bewegt und dabei strafft, biegt sich der am Gehäuse 1 eingespannte Biegestab 8 nach oben. Der der Ventilbohrung 3 zugeordnete Verschließkörper 12 bewegt sich dabei mit einem Bezugspunkt 17 auf einer Bahnkurve 18, deren Krümmung von der Durchbiegung des Biegestabs 8 abhängt. Damit verändert sich gleichermaßen der Radius 20 der Bahnkurve 18, d.h. der momentane Radius 20 der Kurvenbahn 18 entspricht der jeweiligen Entfernung zwischen dem Momentanpol 19 und dem Bezugspunkt 17 des Ventilschließkörpers 12. Aufgrund eines von dem kürzesten Abstand zwischen dem Momentanpol 19 und einer Wirklinie 16 des Stabes 7 definierten, für die Vergrößerung des Hubes des Ventilschließkörpers 12 ausschlaggebenden wirksa mem Hebelarms 21 stellt sich ein Übersetzungsverhältnis i ein, das sich aus dem Längenverhältnis von Radius 20 zum Hebelarm 21 ergibt. Die Wirklinie 16 ist eine Gerade, die durch den Bezugspunkt 17 und den Befestigungspunkt 5a des Stabes 7 mit dem Stößel 5 verläuft.

Bei dem Getriebe 6 gemäß Fig. 1 befindet sich der Wandlerstab 7 auf der konvexen Seite der Bahnkurve 18; der Hebelarm 21 wird mit zunehmendem Öffnungshub - dargestellt ist die Öffnungslage des Modulators 12 - kleiner und das Übersetzungsverhältnis i somit größer. In Fig. 2 ist die geschlossene Lage des Ventils 1 dargestellt. Der Hebelarm 21 des elastischen Getriebes 1 ist gegenüber der in Fig. 1 dargestellten Schließlage wesentlich größer. Der momentane Radius 20 hat sich nur wenig verändert, so daß das Übersetzungsverhältnis 1 gemäß Fig. 2 kleiner als das gemäß Fig. 1 ist.

Eine zweite Ausführung eines elastischen Getriebes 106, bei der sich ein Wandlerstab 107 auf der konkaven Seite einer Bahnkurve 118 befindet, ist in Fig. 3 dargestellt. Der am Stößel 5 des Wandlers 4 befestigte Stab 107 greift mit seinem von dem Stößel entfernten Stabende 111 an das den Modulator 12 tragende freie Stabende 110 eines Biegestabes 108 an, dessen gehäuseseitiges Einspannende 109 gegenüber der Ausführung gemäß Fig. 1 um 180° gedreht ist und sich an der Seite des Gehäuses 1 befindet, an der auch der Wandler 4 angeordnet ist; der Stab 107 und der Biegestab 108 sind nach Art eines Auslegers angeordnet und bilden einen spitzen Winkel. Wie bei der Ausführung gemäß Fig. 1 liegt auch hier ein variables, sich mit dem Wandlerhub selbsttätig veränderndes Übersetzungsverhältnis i vor, das sich aus dem wechselnden Längenverhältnis von Radius 120 zum Hebelarm 121 ergibt. Der Radius 120 wird durch die Entfernung zwischen dem Bezugspunkt 117 des Modulators 12 auf der Bahnkurve 118 und dem Momentanpol 119 bestimmt. Die wirksame Länge des Hebelarms 121 stellt die kürzeste Entfernung zwischen dem Momentanpol 119 und der Wirklinie 116 des Stabes 107 dar; die Wirklinie 116 ist bei dieser Anordnung fast deckungsgleich mit dem Stab 107. Der wirksame Hebelarm 121 ist bei gleicher Ventilöffnung deutlich größer als der wirksame Hebelarm 21 bei dem Getriebe 6 gemäß Fig. 1. Bei im wesentlichen gleichen Radien 20 (Fig. 1) und 120 (Fig. 3), ist das Übersetzungsverhältnis i gegenüber dem der Ausführung gemäß Fig. 1 kleiner und hat außerdem mit zunehmendem Öffnungshub - bis in die dargestellte Öffnungslage -des Modulators 12 abgenommen. Zur Begrenzung des Modulatorhubs ist ein Anschlag 24 angeordnet. Ein in dem Freiraum, d.h. im spitzen Winkel zwischen den Stäben 107, 108 angeordneter Gehäusevorsprung 48 besitzt eine bogenförmige Nockenfläche 53, an die sich der Biegestab 108 im Verlaufe des Öffnungshubes des Modulators 12, d.h. beim Ziehen an den Wandlerstab 107 anlegt. Die Nockenfläche 53 verändert die Krümmung des Biegestabes 108 und entlastet diesen von der Querkraft, so daß eher eine reine Biegung vorliegt.

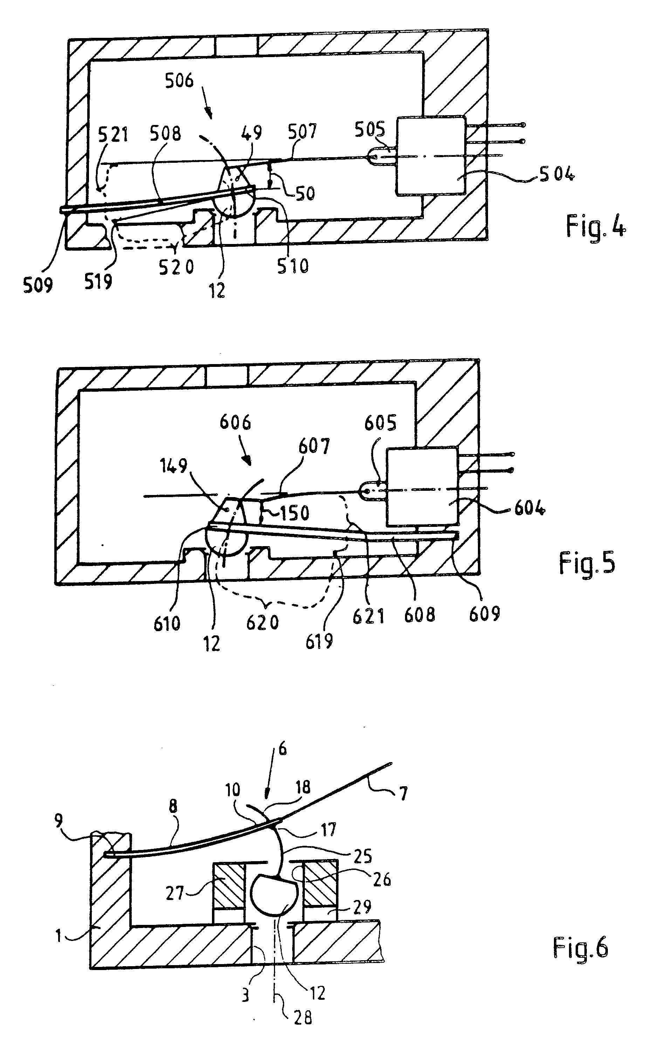

Bei der Ausführung gemäß Fig. 4 sind ein Wandlerstab 507 und ein Biegestab 508 an ihren freien Enden über ein Zwischenstück 49 miteinander verbunden. Die Höhe 50 des ein Biegemoment für den Biegestab 508 erzeugenden Zwischenstückes 49 ist so bemessen, daß die Stabe 508 und 507 nahezu parallel liegen. Das Ventil schließt, d.h. der Modulator 12 senkt sich ab, wenn der Stößel 505 am Stab 507 zieht. Das eingeleitete Biegemoment ist längs des Biegestabes 508 nahezu gleichbleibend. Das Übersetzungsverhältnis i wird durch den Radius 520 und den Hebelarm 521 in Verbindung mit dem Momentanpol 519 bestimmt.

In Fig. 5 ist die Verbindung der freien Enden eines Wandlerstabes 607 und eines Biegestabes 608 über ein Zwischenstück 149 für ein elastisches Getriebe gemäß Fig. 3 dargestellt. Auch hierbei erzeugt ein am Wandlerstab 607 ziehender Stößel 605 über ein Zwischenstück 149 mit der Höhe 150 ein Biegemoment mit praktisch gleichbleibendem Verlauf längs des Biegestabes 608. Das Übersetzungsverhältnis wird durch den Radius 620 und den Hebelarm 621 in Verbindung mit dem Momentanpol 619 definiert. Aufgrund des nahezu gleichbleibenden Momentenverlaufs über die Länge des Biegestabes 508 bzw. 608 können diese sowohl bei der Ausführung gemäß Fig. 4 als auch der gemäß Fig. 5 einen konstanten Querschnitt besitzen.

Der Modulator 12 gemäß Fig. 6 ist über ein vorzugsweise kurzes Federgelenk 25 mit dem freien Biegestabende 10 verbunden und wird in einer Zentrierbohrung 26 eines der Ventilbohrung 3 vorgeschalteten Blockes 27 zentrisch zur Ventilbohrung 3 auf einer Geraden 28 geführt. Der Bezugspunkt 17 liegt in diesem Fall annäherungsweise auf dem freien Biegestabende 10 und auf der Bahn 18. Es ergeben sich Übersetzungsverhältnisse, die denen bei der Ausführung gemäß Fig. 1 angenähert sind, wobei die Gerade 28 nur einen kleinen Winkel mit der Bahn 18 bildet.

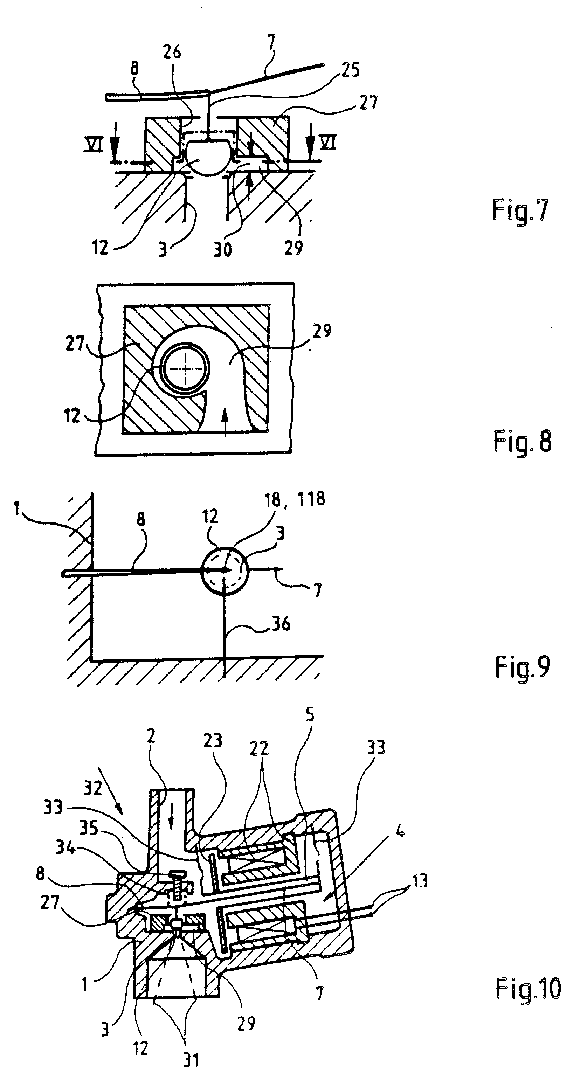

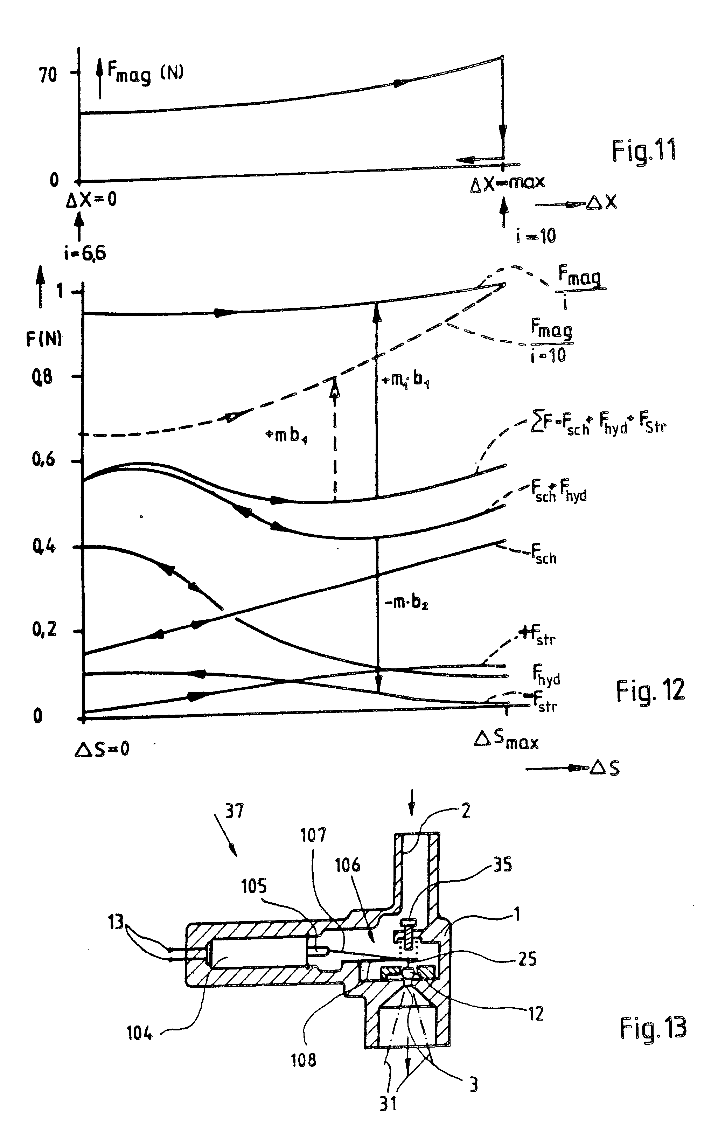

Das Fluid gelangt bei einem gemäß Fig. 7 in einem Block 27 geführten Modulator 12 über einen in dem Block 27 angeordneten Zulaufkanal 29 in die Ventilbohrung 3. Der Kanal 29 erstreckt sich oberhalb der Ventilbohrung 3 in dem Block 27 ringsum den Modulator 12 und besitzt gemäß Fig. 8 einen sich in Richtung der Strömung spiralförmig verringernden Querschnitt, so daß das Fluid vor dem Eintritt in die Ventilbohrung 3 durch den spiralförmigen Verlauf des Kanals 29 einen das feine Zerstäuben unterstützenden Drall erfährt. Die Höhe 30 des Zulaufkanals 29 entspricht etwa dem maximalen Modulator- bzw. Ventilhub, so daß die Zuströmung störende Kantenüberschneidungen vermieden werden. Der Strömungsquerschnitt der Ventilbohrung 3 erweitert sich sprungartig in Strömungsrichtung, so daß fliehkraftbedingt zusätzlich eine Radialgeschwindigkeit entsteht, wodurch das Fluid innerhalb eines Kegels 31 (Fig. 10 und Fig. 13) fein zerstäubt wird.

In Fig. 9 ist eine Führung des Modulators 12 auf der Bahnkurve 18, 118 (hier etwa senkrecht zur Zeichenebene) mittels einer längssteifen Führungsstrebe 36 dargestellt. Die Strebe 36 verbindet den Biegestab 8 und den Modulator 12 mit dem Gehäuse 1. Auf diese Weise entsteht in der Zeichnungsebene ein stabiles Zweibein; der Modulator 12 wird reproduzierbar zu der gestrichelt dargestellten Ventilbohrung 3 geführt. Der Stab 8 und die Führungsstrebe 36 werden bei der Fertigung zweckmäßig dann mit dem Modulator 12 verbunden, beispielsweise durch Punktschweißen, wenn dieser der Ventilbohrung 3 schließend anliegt.

Ein auf der ersten Ausführung gemäß Fig. 1, Fig. 2 und Einzelheiten der Fig. 6 bis 8 basierendes Einspritzventil 32 ist in Fig. 10 dargestellt. Der Stab 7 erstreckt sich hier bis in das Magnetsystem 22 des in diesem Fall elektromagnetischen Wandlers 4 hinein und ist dort am Stößel 5 befestigt. Der Stößel 5 und der von ihm getragene Magnetanker 23 werden von zwei im Ventilgehäuse 1 festgelegten Blattfedern 33 parallel geführt. Der Biegestab 8 mit dem als Ventilschließkörper ausgebildeten Modulator 12 wird von einer sich am Ventilgehäuse 1 abstützenden Schließfeder 34 in Richtung auf die Ventilbohrung 3 beaufschlagt. Eine Anschlagschraube 35 begrenzt den Öffnungshub des Biegestabs 8 mit dem daran befestigten Modulator 12.

Aus Fig. 11 ist die Abhängigkeit der am Stößel 5 erziel-bzw. übertragbaren Magnetkraft $F_{mag}$ des Wandlers 4 vom Stößelhub $\Delta x$ ersichtlich. Bei geschlossenem Ventil ($\Delta x = 0$), d.h. bei in die Ventilbohrung 3 schließend eingreifendem Modulator 12 ist die Magnetkraft am kleinsten. Ursache dafür ist der dann maximale Arbeitsluftspalt zwischen dem Magnetsystem 22 und dem Magnetanker 23 des Wandlers 4 (Fig. 10). Bei offenem Ventil ($\Delta x = $ max), d.h. in der in Fig. 1 dargestellten Öffnungsstellung des Modulators 12 ist $F_{mag}$ am größten, während $F_{mag}$ zwecks Schließen des Ventils gegen Null geht.

In Fig. 12 ist die Kräftebilanz am Modulator 12 für das Einspritzventil gemäß Fig. 10, d.h. unter Verwendung der ersten Ausführung nach Fig. 1 dargestellt.

In den Fig. 11 und 12 bedeuten:

Linkspfeil: Schließen

Rechtspfeil: Öffnen

Wenn $F_{mag}$ gemäß Fig. 11 durch das momentane Übersetzungsverhältnis i dividiert wird, so ergibt sich der in Fig. 12 dargestellte, weitestgehend konstante Verlauf von $F_{mag}/i$, wobei die sich daraus ergebende Kraft als virtuelle Bruttokraft am freien Ende 10 des Biegestabes 8 angreift (Fig. 1).

In dem Diagramm gemäß Fig. 12 sind - abhängig vom Modulatorhub $\Delta s$ - außerdem die nachfolgenden Kräfte eingetragen:

| | |
|---|---|
| $F_{Str} =$ | effektiver Strömungswiderstand von Modulator 12, Hebelgetriebe 6 und Magnetanker 23 (bei Annahme eines Magnetsystems 22 im Wandler 4) |
| $F_{hyd} =$ | hydraulische Schließkraft |
| $F_{sch} =$ | Kraft der Schließfeder 34 |
| $F_{mag}/i =$ | momentan auf den Modulator 12 übertragener Teil der Magnetkraft |
| $F_{mag}/10$ <br> $=$ | konstant auf den Modulator 12 übertragener Teil der Magnetkraft (bei starrem i = 10) |
| + m <br> mal $b_1$ <br> $=$ | Beschleunigungskraft zum Öffnen bei momentanem i |
| + m <br> mal $b'_1$ <br> $=$ | Beschleunigungskraft zum Öffnen bei starrem i = 10 |
| - m mal $b_2 =$ | Beschleunigungskraft zum Schließen |
| m $=$ | Ersatzmasse von Modulator 12, Hebelgetriebe 6 Magnetanker 23 und Fluidanteilen. |

Hieraus ergibt sich die folgende Bilanz beim Öffnungshub (Rechtspfeil) des Modulators 12:

$F_{Str}$ ist vergleichsweise gering. Bei einem typischen Durchmesser der Ventilbohrung 3 von 1,1 mm und einem maximalen Öffnungshub $\Delta S_{max} = 0,5$ mm nimmt $F_{hyd}$ nach anfänglichem Zögern rapide ab. Dieser Verlust an hydraulischer Schließkraft wird gemäß der Linie $F_{sch}$ zum Ausgleich der Abnahme von $F_{hyd}$ durch die Schließfeder 34 kompensiert; mit abnehmender hydraulischer Schließkraft erhöht sich entsprechend die Kraft der Schließfeder. Durch $F_{sch}$ wird das Ventil außerdem bei nicht vorhandenem Fluiddruck dicht gehalten. Die Summe aller Kräfte ($\Sigma F$) liegt deutlich und gleichmäßig unterhalb der Bruttokraft $F_{mag}/i$. Dadurch bleibt eine adäquate Beschleunigungskraft + m mal $b_1$ zum Öffnen des Ventils übrig. Anstelle des Einsatzes der Schließfeder kann der Biegestab 8 so dimensioniert werden, daß er die zusätzliche Schließkraft aufbringt.

Für das Schließen (Linkspfeil) ergibt sich die folgende Bilanz:

Durch die Summe der Kräfte $F = F_{sch} + F_{hyd}$ wird der Modulator 12 in die Richtung auf die Ventilbohrung 3 bewegt; $F_{mag}$ ist dabei gleich Null (Fig. 11). Die Beschleunigungskraft - m mal x $b_2$ zum Schließen ist gleichmäßig und relativ groß und betragsmäßig etwa so wie die Kraft + m mal $b_1$ zum Öffnen. Daraus resultiert eine geringe Schaltzeit, die in beiden Richtungen annähernd gleich ist.

Zum Vergleich ist in das Diagramm gemäß Fig. 12 der Verlauf der übertragbaren Magnetkraft $F_{mag}$ bei starrem Übersetzungsverhältnis i = 10 als gestrichelte Kurve dargestellt; die damit zur Verfügung stehende Beschleunigungskraft + m mal $b'_1$ ist ungleichmäßig und relativ klein. Dies er gibt eine um ein Mehrfaches längere Zeit zum Öffnen als bei der erfindungsgemäßen Lösung mit einem mit dem Ventilhub zunehmenden Übersetzungsverhältnis i.

Bei dem in Fig. 13 dargestellten Einspritzventil 37 basiert das Getriebe 6 auf dem Prinzip nach Fig. 3. Zum Beaufschlagen des Wandlerstabes 107 wird ein piezoelektrischer Wandler 104 verwendet, der lediglich kleine Hübe des Stößels 105 bewirkt. Durch das mit dem Hub des Modulators 12 abnehmende Übersetzungsverhältnis ergibt sich eine günstige Anpassung der Stellkraft des piezoelektrischen Wandlers 104.

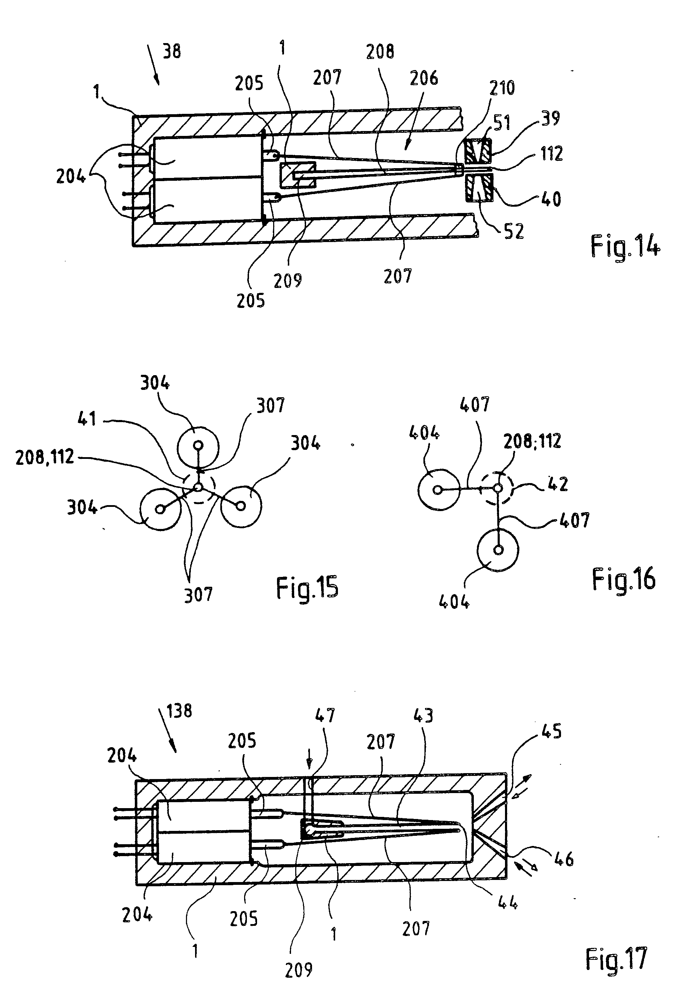

In den Fig. 14 bis 17 sind für den Einsatz in Servoventilen 38 geeignete Abwandlungen des Getriebes nach Fig. 3 dargestellt. Bei dem Servoventil 38 gemäß Fig. 14 greifen an dem freien Biegestabende 210 des mit seinem Einspannende 209 im Gehäuse 1 festgelegten Biegestabes 208 zwei in einer Ebene übereinander angeordnete Wandlerstäbe 207 an, die mit ihren von dem Angriffspunkt an den Biegestab 208 entfernten Enden mit Stößeln 205 zweier Wandler 204 verbunden sind. Ausgehend von der in Fig. 14 dargestellten Mittellage kann sich der am freien Biegestabende 210 angeordnete Modulator 112 je nach Beaufschlagung des einen oder anderen Wandlers 204 innerhalb der Zeichnungsebene entweder nach unten oder nach oben bewegen. Zur Begrenzung des Hubes sind in der Bewegungsrichtung des Modulators 112 Anschläge 39, 40 angeordnet. Das Biegestabende 210 läßt sich auch (nicht dargestellt) mit mindestens einem Zwischenstück 149 gemäß Fig. 5 versehen; alternativ kann auch mindestens ein Gehäusevorsprung 48 gemäß Fig. 3 Verwendung finden.

Gemäß Fig. 14 sind in den Anschlägen 39, 40 Düsen 51, 52 angeordnet. Dadurch wirkt der Modulator 112 in bekannter Weise als Prallplatte in einem Düsen-Prallplatten-Servoventil. In einer nicht dargestellten Abwandlung der Ausführung gemäß Fig. 14 können die Düsen 51 und 52 oberhalb und unterhalb der Zeichenebene liegen, wobei die Düse 51 einen Strahl auf die Düse 52 richtet. Dieser Strahl kann dann vom Modulator 112 durch dessen zur Strahlachse senkrechte Bewegung teilweise unterbrochen oder abgelenkt werden.

Die in den Fig. 15 und 16 schematisch dargestellten Anordnungen von Wandlern 304, 404 und an dem Biegestab 208, 112 angreifenden Wandlerstäben 307, 407 erlauben zweidimensionale Bewegungen des Modulators. Bei der Ausführung gemäß Fig. 15 sind drei Wandler 304 sternförmig angeordnet und über die Stäbe 307 mit dem den Modulator 112 tragenden Biegestab 208 verbunden. Bei Zugkraft in zwei Stäben 307 überstreicht der Modulator in etwa den gestrichelt gekennzeichneten Bereich 41.

Bei der Ausführung gemäß Fig. 16 sind zwei Wandler 404 rechtwinklig zueinander angeordnet, d.h. in unterschiedlichen Ebenen mit Abstand voneinander. Mittels der an dem freien Biegestabende des Biegestabes 208 angreifenden Stäbe 407 wird der Modulator 112 bei von den Wandlern 404 aufgebrachten Druck- und Zugkräften in alle Richtungen innerhalb der Zeichnungsebene in etwa in dem gestrichelt gekennzeichneten Bereich 42 verstellt.

Ein auf der Basis des Prinzips nach Fig. 14 aufgebautes Servoventil 138 ist in Fig. 17 dargestellt; allerdings ist der Biegestab ein flexibles Freistrahlrohr 43 mit einer an dem freien Ende angeordneten Düse 44, die hier als Modula tor wirkt. Der Düse 44 liegen mit Abstand zwei in einer Ebene übereinander im Gehäuse 1 angeordnete Fangbohrungen 45, 46 gegenüber. Das Fluid wird an der gehäuseseitigen Einspannstelle 209 über eine Zuführleitung 47 unter Druck in das Freistrahlrohr 43 gespeist. In der dargestellten Mittellage des Freistrahlrohres 43 werden beide Fangbohrungen 45, 46 gleichmäßig mit dem Servofluid beaufschlagt, so daß in den Fangbohrungen 45, 46 der gleiche Druck herrscht. Durch Auslenken des Freistrahlrohres 43 mittels von den Wandlern 204 erzeugter Zugkraft, die sich über die Stößel 205 und die Wandlerstäbe 207 auf das Freistrahlrohr 43 überträgt, entweder nach oben oder nach unten, enthält entweder die Fangbohrung 45 oder die Fangbohrung 46 einen größeren Anteil des Auffangdruckes.

## Ansprüche

1. Fluiddurchströmtes Elektroventil mit mindestens einem im Ventilgehäuse angeordneten elektromechanischen Wandler, der zum Verändern von Fluidströmen oder -drücken Stellbewegungen eines Modulators bewirkt, gekennzeichnet durch ein elastisches Getriebe (6, 106, 206, 506, 606) zwischen dem Modulator (12, 112) und dem elektromechanischen Wandler (4, 104, 204, 304, 404, 504, 604).

2. Elektroventil nach Anspruch 1, dadurch gekennzeichnet, daß das Getriebe (6, 106, 206, 506, 606) einen an einem Ende (9, 109, 209, 509, 609) eingespannten Biegestab (8, 108, 208, 508, 608, 43) und zumindest einen einerseits an dem freien Biegestabende (10, 110, 210, 510, 610) angreifenden und andererseits mit dem Wandler (4, 104, 204, 304, 404, 504, 604) verbundenen Wandlerstab (7, 107, 207, 307, 407, 507, 607) besitzt.

3. Elektroventil nach Anspruch 1 oder 2, dadurch gekennzeichnet, daß der Wandlerstab (7, 107, 207, 307, 407, 507, 607) über ein Zwischenstück (49, 149) an dem freien Biegestabende (10, 110, 210, 510, 610) angreift.

4. Elektroventil nach einem oder mehreren der Ansprüche 1 bis 3, dadurch gekennzeichnet, daß der Biegestab (8, 108, 208, 508, 608, 43) im Ventilgehäuse (1) eingespannt ist.

5. Elektroventil nach einem oder mehreren der Ansprüche 1 bis 4, dadurch gekennzeichnet, daß der Modulator (12, 112, 44) am freien Biegestabende (10, 110, 210, 510, 610) angeordnet ist.

6. Elektroventil nach einem oder mehreren der Ansprüche 1 bis 5, dadurch gekennzeichnet, daß das von dem freien Biegestabende (10, 110, 210, 510, 610) entfernte Ende des Wandlerstabes (7, 107, 207, 307, 407, 507, 607) mit einem Stößel (5, 105, 205, 505, 605) des elektromechanischen Wandlers (4, 104, 204, 304, 404, 504, 604) verbunden ist.

7. Elektroventil nach einem oder mehreren der Ansprüche 1 bis 5, dadurch gekennzeichnet, daß sich der Wandlerstab (7, 107, 207, 307, 407, 507, 607) bis zwischen Magnetspulen (22) des elektromechanischen Wandlers (4, 104, 204, 304, 404, 504, 604) erstreckt.

8. Elektroventil nach Anspruch 6 oder 7, gekennzeichnet durch mit dem Stößel (5, 105, 205, 505, 605) verbundene Blattfedern (34).

9. Elektroventil nach einem oder mehreren der Ansprüche 1 bis 8, dadurch gekennzeichnet, daß der Modulator als mit einer Ventilbohrung (3) korrespondierender Ventilschließkörper (12) ausgebildet ist.

10. Elektroventil nach einem oder mehreren der Ansprüche 1 bis 9, dadurch gekennzeichnet, daß der Ventilschließkörper (12) über ein Biegegelenk (25) an das freie Biegestabende (10, 110, 210, 510, 610) angelenkt ist.

11. Elektroventil nach Anspruch 10, dadurch gekennzeichnet, daß der Ventilschließkörper (12) in eine der Ventilbohrung (3) vorgeschaltete Zentrierbohrung (26) eingreift.

12. Elektroventil nach einem oder mehreren der Ansprüche 1 bis 10, dadurch gekennzeichnet, daß eine Führungsstrebe (36) den Biegestab (8, 108, 208, 508, 608, 43) und/oder den Modulator (12, 112) mit dem Ventilgehäuse (1) verbindet.

13. Elektroventil nach einem oder mehreren der Ansprüche 1 bis 12, gekennzeichnet durch einen Zulaufkanal (29) der Ventilbohrung (3) mit sich in Strömungsrichtung des Fluids spiralförmig verjüngendem Querschnitt.

14. Elektroventil nach Anspruch 13, dadurch gekennzeichnet, daß die Höhe (30) des Zulaufkanals (29) etwa dem maximalen Hub des Modulators (12, 112) entspricht.

15. Elektroventil nach einem oder mehreren der Ansprüche 1 bis 14, gekennzeichnet durch eine den Biegestab (8, 108, 208, 508, 608, 43) des Getriebes (6, 106, 206, 506, 606) in Richtung auf die Ventilbohrung (3) beaufschlagende Schließfeder (34).

16. Elektroventil nach einem oder mehreren der Ansprüche 1 bis 8, gekennzeichnet durch zumindest in zwei unterschiedlichen Ebenen zu dem Biegestab (208) angeordnete, mit Wandlerstäben (207, 307, 407) an das freie Biegestabende (210) angreifende elektromechanische Wandler (204, 304, 404).

17. Elektroventil nach einem oder mehreren der Ansprüche 1 bis 8 und 16, dadurch gekennzeichnet, daß der Biegestab als Freistrahlrohr (43) mit einer Düse (44) ausgebildet ist.

18. Elektroventil nach Anspruch 17, dadurch gekennzeichnet, daß der Düse (44) zumindest eine Fangbohrung (45, 46) gegenüberliegt.

19. Elektroventil nach einem oder mehreren der Ansprüche 1 bis 16, gekennzeichnet durch einen sich zum freien Stabende (10, 110, 210) hin verjüngenden Biegestab (8, 108, 208).

20. Elektroventil nach einem oder mehreren der Ansprüche 1 bis 19, gekennzeichnet durch im Hubweg des Modulators (12, 112, 44) angeordnete Anschläge (24; 35; 39, 40).

21. Elektroventil nach einem oder mehreren der Ansprüche 1 bis 8, 16, 19 und 20, dadurch gekennzeichnet, daß die Anschläge (39, 40) als Düsen (51, 52) ausgebildet sind.

22. Elektroventil nach einem oder mehreren der Ansprüche 1 bis 15 und 20, dadurch gekennzeichnet, daß sich ein längs des Biegestabes (8, 108, 208, 508, 608) erstreckender Gehäusevorsprung (48) mit einer bogenförmigen Nockenfläche (53) an den Biegestab (8, 108, 208, 508, 608) anlegt.

Fig.1

Fig.2

Fig.3

Fig. 4

Fig. 5

Fig. 6

Fig. 7

Fig. 8

Fig. 9

Fig. 10

Fig.11

Fig.12

Fig.13

Fig.14

Fig.15

Fig.16

Fig.17